# EUROPÄISCHE PATENTSCHRIFT

(11) **EP 2 914 867 B1**
(45) Veröffentlichungstag und Bekanntmachung des Hinweises auf die Patenterteilung: **22.03.2017**
(21) Anmeldenummer: 13779807.0
(22) Anmeldetag: 18.10.2013
(51) Int. Cl.: F16D 65/12, F16D 65/847

(54) **BREMSSCHEIBE**
BRAKE DISK
DISQUE DE FREIN

(30) Priorität: 30.10.2012 DE 102012219840
(43) Veröffentlichungstag der Anmeldung: 09.09.2015
(73) Patentinhaber: SAF-HOLLAND GmbH, 63856 Bessenbach (DE)
(72) Erfinder: WALLMEIER, Stefan, 63773 Goldbach (DE); ROOS, Michael, 97828 Marktheidenfeld (DE)
(74) Vertreter: Müller Schupfner & Partner Patent- und Rechtsanwaltspartnerschaft mbB
(86) Internationale Anmeldenummer: PCT/EP2013/071841
(87) Internationale Veröffentlichungsnummer: WO 2014/067800

(56) Entgegenhaltungen:
- FR-A1- 2 272 302
- FR-A1- 2 862 115
- JP-A- H02 113 134
- KR-A- 20110 034 850

## Beschreibung

Die vorliegende Erfindung betrifft eine Bremsscheibe, insbesondere für ein Nutzfahrzeug, Zusatzelemente, insbesondere Korrosionsschutzelemente, sowie Verfahren zur Herstellung einer Bremsscheibe, insbesondere für ein Nutzfahrzeug.

Bremsscheiben, insbesondere für Nutzfahrzeuge, sind aus dem Stand der Technik hinlänglich bekannt. Aufgrund der hohen Beanspruchungen werden in der Regel innenbelüftete Bremsscheiben verwendet, die aus zwei Reibringen bestehen, welche über Verbindungsstege miteinander verbunden sind. Zwischen den zwei Reibringen werden auf diese Weise Lüftungskanäle geschaffen, die der Kühlung der Bremsscheibe dienen. Neben den sehr hohen mechanischen Belastungen sowie den hohen Temperaturbelastungen sind Bremsscheiben auch den unterschiedlichsten Witterungsbedingungen ausgesetzt. Insbesondere bei innenbelüfteten Bremsscheiben kommt es aufgrund des Einflusses von Feuchtigkeit und Salz zur Korrosion innerhalb der Bremsscheibe und hier vor allem an den Verbindungsstegen. Bei längerem Einwirken dieser Medien kommt es im schlimmsten Fall sogar zum Durchkorrodieren und damit zum Funktionsausfall des sicherheitsrelevanten Bauteils Bremsscheibe.

KR 20110034850 A bezieht sich auf eine Bremsscheibe, welche in den Reibringen ein Opferanoden-Material aufweist.

JP H 02113134 A offenbart eine Bremsscheibe, welche innerhalb ihrer Reibringe Bohrungen aufweist. Innerhalb der Bohrungen sind Hülsen angeordnet, welche als Opferanoden fungieren.

FR 2 272 302 A1 betrifft eine Scheibenbremse, insbesondere für Schienenfahrzeuge, mit einer zwei durch Ventilationsrippen beziehungsweise Leitschaufeln miteinander verbundene, Ventilationskanäle einschließenden Scheiben aufweisender Bremsscheibe, an welcher mit Bremsbelägen versehene Bremsbacken anpressbar sind.

FR 286 115 A1 bezieht sich auf einen Verbund wenigstens einer Bremsscheibe mit einer Nabe, wobei der Verbund umfangsseitig zueinander benachbarte Stege zwischen der Bremsscheibe und der Nabe aufweist und wobei die an der Bremsscheibe verankerte Stege an der Nabe befestigt sind und wobei wenigstens zwei in Umfangsrichtung zueinander benachbarte der Stege gemeinsam einstückig aus einem gebogenen Profil gebildet sind.

Es ist also Aufgabe der vorliegenden Erfindung, eine Bremsscheibe, insbesondere für ein Nutzfahrzeug, Zusatzelemente, insbesondere Korrosionsschutzelemente sowie Verfahren zur Herstellung einer Bremsscheibe, insbesondere für ein Nutzfahrzeug, anzugeben, welche die Bremsscheibe, insbesondere an den Verbindungsstegen, vor Korrosionsschäden schützen.

Diese Aufgabe wird gelöst durch eine Bremsscheibe, insbesondere für ein Nutzfahrzeug, nach Anspruch 1 sowie drei Verfahren zur Herstellung einer Bremsscheibe, insbesondere für ein Nutzfahrzeug, nach den Ansprüchen 11 bis 13. Weitere Vorteile und Merkmale der Erfindung ergeben sich aus den Unteransprüchen sowie der Beschreibung und den beigefügten Figuren.

Erfindungsgemäß weist eine Bremsscheibe, insbesondere für ein Nutzfahrzeug, zwei im Wesentlichen parallel zueinander angeordnete Reibringe und zumindest einen Verbindungssteg auf, wobei die Reibringe jeweils eine Reibfläche aufweisen, welche jeweils eine Ebene beschreiben bzw. aufspannen, wobei der zumindest eine Verbindungssteg die zwei Reibringe derart miteinander verbindet, dass zwischen den Ebenen der Reibringe ein Zwischenraum gebildet ist, wobei die Bremsscheibe zumindest ein Zusatzelement aufweist, das innerhalb des Zwischenraums angeordnet ist, und wobei das Zusatzelement aus einem unedleren Werkstoff als der zumindest eine Verbindungssteg und die Reibringe ausgebildet ist. Zweckmäßigerweise sind die Reibringe konzentrisch zueinander angeordnet. Bevorzugt sind dadurch auch die jeweiligen Reibflächen konzentrisch zueinander angeordnet. Die Reibringe bzw. die Reibflächen sind bevorzugt konzentrisch um eine gemeinsame Rotationsachse angeordnet. Die Ebenen der Reibflächen liegen im Wesentlichen senkrecht auf der gemeinsamen Rotationsachse. Dadurch liegt auch der Zwischenraum im Wesentlichen senkrecht zu der Rotationsachse. Der Zwischenraum ist dabei nicht als Bauteil oder dergleichen zu verstehen, sondern gibt letztlich ein Gebiet, beziehungsweise im dreidimensionalen Raum gesehen, ein Volumen an, innerhalb dessen das zumindest eine Zusatzelement anordenbar ist. Mit anderen Worten beschreibt der Zwischenraum eine Scheibe, welche senkrecht und konzentrisch zur Rotationsachse ausgerichtet ist und eine Dicke aufweist, die sich über den Abstand der beiden Ebenen der Reibflächen bemisst. Der Zwischenraum kann auch eine geringere Dicke aufweisen, beispielsweise indem er sich nur von einem zum anderen Reibring erstreckt, die Reibringe selbst also nicht mehr mit umfasst. Der Zwischenraum kann auch nicht die Form einer geschlossenen "Scheibe" aufweisen, sondern beispielsweise im Wesentlichen mittig sozusagen ein "Loch" aufweisen. Damit ist gemeint, dass sich der Zwischenraum mit Vorteil auch nur innerhalb der beiden Reibflächen bzw. nur zwischen den beiden Reibringen erstreckt und den Raum in der Mitte, in dem sich z. B. der Anbindungsadapter befindet, sozusagen ausklammert. Zweckmäßigerweise ist die Anordnung des Zusatzelements innerhalb des Zwischenraums frei wählbar, so lange das nachfolgend noch erläuterte Prinzip des Korrosionsschutzes anwendbar ist. Dabei bedeutet "anwendbar", dass z. B. zwischen dem Zusatzelement und dem zu schützenden Material eine elektrische leitende Verbindung bestehen sollte. Neben den Reibringen weisen Bremsscheiben der genannten Art in der Regel bevorzugt einen Anbindungsadapter auf, welcher der Anbindung der Reibringe mittelbar und/oder unmittelbar an eine Radnabe oder dergleichen ermöglicht. Der Anbindungsadapter ist dabei bevorzugt form- und/oder kraftschlüssig mit zumindest einem Reibring verbunden. Ebenfalls bevorzugt kann auch eine einteilige Ausführungsform sein, in welcher der Anbindungsadapter und die Reibringe ein Bauteil darstellen. Die Reibringe erfüllen also die eigentliche Funktion der Bremsscheibe, indem durch sie über Anlegen entsprechender Bremsklötze der eigentliche Bremskraftaufbau und damit die Verzögerung erreicht werden. Der Anbindungsadapter wiederum ist dazu vorgesehen, die Reibringe mit der Radnabe etc. zu verbinden und damit sozusagen das Bremsmoment letztendlich auf das drehende Rad zu übertragen. In bevorzugten Ausführungen ist der Reibring auf den Anbindungsadapter gegossen, in einer Art, dass sich der Reibring bzw. die Reibringe radial ausdehnen können, wodurch ein Aufschirmen der Reibringe vermieden werden kann (beispielsweise wenn diese starken Temperaturschwankungen unterlegen sind). Bei weiteren bevorzugten Ausführungsformen sind zwischen dem Reibring und dem Anbindungsadapter zusätzliche Verbindungselemente angeordnet, auf welche der Reibring und der Anbindungsadapter gegossen werden. Es versteht sich, dass auch der Anbindungsadapter konzentrisch zur Rotationsachse angeordnet ist. Der Anbindungsadapter ist auch im Zwischenraum angeordnet und somit geeignet für die Anordnung zumindest eines Zusatzelements. Gleiches gilt für die Verbindungselemente. Bevorzugt ist zwischen den Reibringen eine Vielzahl von Verbindungsstegen angeordnet. Diese sind derart angeordnet und ausgebildet, dass innerhalb der Reibringe bzw. zwischen den Reibringen ein System aus Strömungs- bzw. Lüftungskanälen ausgebildet wird. Bevorzugt besteht der Reibring aus einem Metallguss, vorzugsweise einem warmfesten Scheibenwerkstoff. Die Verbindungsstege sind bevorzugt aus dem gleichen Werkstoff wie die Reibringe gefertigt. Bevorzugt stellen also die Verbindungsstege und die Reibringe ein Bauteil dar, welches bevorzugt über ein urformendes Fertigungsverfahren, insbesondere ein Gießverfahren, hergestellt ist. Bevorzugt dient nun das Zusatzelement dazu, die Reibringe und insbesondere die Verbindungsstege vor Korrosion zu schützen. Mit Vorteil ist das Zusatzelement aus einem unedleren Werkstoff als die Reibringe und/oder der zumindest eine Verbindungssteg bzw. die Vielzahl von Verbindungsstegen ausgebildet. Das Zusatzelement dient also zweckmäßigerweise als Opferanode. Dabei ist das Zusatzelement bzw. sind die Zusatzelemente, wenn es/sie bereits während des Herstellungsprozesses der Bremsscheibe in die Bremsscheibe eingebracht wird/werden, sozusagen ein Bestandteil der Bremsscheibe. Die Anordnung des Zusatzelements ist also ein Teil des Herstellungsverfahrens der Bremsscheibe. Es versteht sich, dass die Anordnung des Zusatzelements auch ein Teil der Herstellung des oder der Reibringe und/oder des Anbindungsadapters und/oder des zumindest einen Verbindungsstegs und/oder eines anderen Bestandteils der Bremsscheibe sein kann. Alternativ bevorzugt ist die Anordnung des Zusatzelements gerade kein Bestandteil oder Abschnitt des Herstellungsverfahrens der Bremsscheibe und seiner Bestandteile. Das zumindest eine Zusatzelement ist dann vorteilhafterweise an die (bereits bestehende) Bremsscheibe form- und/oder kraftschlüssig anordenbar und als solches jederzeit leicht austauschbar bzw. auswechselbar. Weiterhin ist das Zusatzelement bevorzugt einteilig ausgebildet. Alternativ kann aber auch eine mehrteilige Ausführungsform von Vorteil sein. Dabei kann eine Variante auch dahingehend ausgebildet sein, dass ein Teil des Zusatzelements z. B. in die Bremsscheibe eingegossen ist, wobei ein zweiter Teil des Zusatzelements in dem eingegossenen Teil form- und/oder kraftschlüssig angeordnet und austauschbar ist. Insbesondere im Hinblick auf die thermischen Belastungen an der Bremsscheibe zeigt sich ein Vorteil durch das Aufbringen bzw. Anbringen von zumindest einem Zusatzelement gegenüber dem bloßen Beschichten der Scheibe, beispielsweise mit einer Korrosionsschutzschicht. Gerade spröde Beschichtungen, die eine wesentlich höhere oder niedrigere thermische Ausdehnung aufweisen, als ein Grundwerkstoff, z. B. der warmfeste Scheibenwerkstoff, der Bremsscheibe, bekommen Risse oder lösen sich ganz vom Grundwerkstoff der Bremsscheibe, wenn sich die Bremsscheibe ausdehnt. Vor allem an den Rissen kann dann verstärkt Spaltkorrosion auftreten. Dadurch, dass das Zusatzelement nicht zwangsweise flächig angebunden sein muss, stellt sich das beschriebene Problem nicht in diesem Maße. Bei dem hier betrachteten Korrosionsprozess gehen die Metallionen des unedleren Werkstoffs an dem Zusatzelement in Lösung und Elektronen fließen zum Werkstoff der Bremsscheibe, an welchen die Reduktion der im Wasser gelösten Protonen erfolgt. Bei diesem aktiven Korrosionsschutz wird die Korrosion des edleren Bremsscheibenmaterials verhindert oder zumindest stark reduziert. In bevorzugten Ausführungsformen wird als Material für das Zusatzelement zum Beispiel Magnesium oder Zink verwendet. Jedoch ist jedes beliebige Material für das Zusatzelement verwendbar, solange es gegenüber dem Material bzw. den Materialien der Verbindungsstege und dem oder der Reibringe als unedleres Material gelten kann. Dabei sind die Begriffe "edel" und "unedel" dahingehend definiert, dass ein Material umso edler ist, je stärker positiv sein Standardpotential ist. Das unedlere Material weist in wässriger Umgebung ein hohes Vermögen zur Elektronenabgabe auf, wobei diese Eigenschaft der bekannten elektrochemischen Spannungsreihe zu entnehmen ist. Verständlicherweise ist ein Material als Opferanode besonders gut geeignet, welches als Redoxpaar mit dem Material der Bremsscheibe (also der Reibringe, Verbindungsstege etc.) eine besonders hohe Differenz der Standardpotenziale aufweist. Bevorzugt liegt das Standardpotential zwischen dem Zusatzelement und/oder dem zumindest einen Verbindungssteg und/oder dem zumindest einen Reibring bei etwa 0,1 bis 1,1 V, besonders bevorzugt bei etwa 1,1 bis 3,3 V. Je nach Materialpaarung sind auch höhere Werte durchaus erwünscht. Das Zusatzelement kann zweckmäßigerweise auf viele unterschiedliche Verfahrensweisen und in jeder beliebigen Form eingebracht werden, wobei es mit Vorteil in der Nähe der Verbindungsstege liegen sollte. Allgemein formuliert kann das Zusatzelement mit Vorteil in der Nähe des Bauteils angeordnet sein bzw. werden, das besonders vor Korrosion geschützt werden soll. Es versteht sich, dass nicht alle Zusatzelemente aus dem identischen Material hergestellt sein müssen. Bevorzugt kann die Materialwahl für das Zusatzelement auch zusätzlich von der Positionierung abhängig sein. Hierbei sind die Dichte des Materials und damit die Masse des Zusatzelements entscheidend. Zweckmäßigerweise weist das an der Rotationsachse näher angeordnete Zusatzelement eine höhere Dichte auf als das (radial gesehen) weiter weg Angeordnete. Letztendlich geht es um die Masse, welche sich aus der Dichte und dem Volumen ergibt, so dass bevorzugt das an der Rotationsachse näher angeordnete Zusatzelement eine höhere Masse aufweist als das weiter weg Angeordnete. Die Zentrifugalkräfte können damit reduziert werden. Mit Vorteil ist das Zusatzelement derart angeordnet, dass der Form- und/oder Kraftschluss mit der Bremsscheibe durch die Zentrifugalkräfte erhöhbar ist. Weiter liegt auch keine Beschränkung hinsichtlich des Herstellungsverfahrens der Bremsscheibe vor. Es ist also nicht zwingend, dass die Bremsscheibe z. B. gegossen ist.

Vorteilhafterweise weist das Zusatzelement einen Anordnungsbereich auf, über welchen es an dem Verbindungssteg und/oder an zumindest einem Reibring festgelegt oder festlegbar ist. Mit Vorteil ist die Anordnung des Zusatzelements lösbar ausgebildet, vorzugsweise zum Austausch innerhalb eines festgelegten Wartungsintervalls. Bevorzugt ist der Anordnungsbereich des Zusatzelements der Bereich, mit welchem es mit der Bremsscheibe in Kontakt steht. Hierbei ist es unerheblich, ob das Zusatzelement als Vollkörper oder als Hohlkörper ausgebildet ist. In einer bevorzugten Ausführungsform des Zusatzelements ist dieses beispielsweise als im Wesentlichen zylindrischer Hohlkörper ausgebildet, welcher den Anordnungsbereich zumindest bereichsweise als eine Innenfläche aufweist. Das derartig ausgebildete Zusatzelement ist also bevorzugt um einen Verbindungssteg herum angeordnet. Der Verbindungssteg ist bei dieser Variante bevorzugt eingegossen bzw. in das Zusatzelement zumindest teilweise hineingegossen. Alternativ bevorzugt ist das zumindest bereichsweise zylindrisch und als Hohlkörper ausgebildete Zusatzelement umfänglich nicht mit einer durchgehenden Oberfläche ausgebildet, sondern weist beispielsweise einen Schlitz und/oder eine Öffnung auf, wodurch es an dem Verbindungssteg zum Beispiel anklipsbar ist. Alternativ bevorzugt kann der Anordnungsbereich auch als Haken oder dergleichen geformt werden, welcher einen Kraft- und/oder Formschluss mit dem Verbindungssteg, bevorzugt auch mehreren, ermöglicht. Das Zusatzelement weist also mit Vorteil zumindest einen Anordnungsbereich auf. Bevorzugt weist das Zusatzelement mehrere Anordnungsbereiche auf, über welche es entsprechend an mehreren Verbindungsstegen anordenbar ist. Ebenfalls bevorzugt ist der Anordnungsbereich des Zusatzelements auch gerade nicht mit einer speziellen Geometrie versehen. Hierzu ist mit Vorteil in der Bremsscheibe, also in einem oder auch in beiden Reibringen bzw. in dem entsprechenden Verbindungssteg, in welchem das Zusatzelement angeordnet werden soll, eine Aufnahme, beispielsweise in Form einer Öffnung, beispielsweise eines Schlitzes oder einer Bohrung, vorgesehen, in welcher das Zusatzelement dann form- und/oder kraftschlüssig anordenbar ist. Bevorzugt erfolgt die Anordnung dann über eine Presspassung, die derart ausgelegt ist, dass die beim Einsatz der Bremsscheibe auftretenden Temperaturverzüge berücksichtigt sind, so dass ein derart angeordnetes Zusatzelement auch nicht heraus fällt. Bevorzugt kann die parallele Anordnung der Reibringe auch dazu genutzt werden, zwischen ihnen zumindest ein Zusatzelement bevorzugt kraftschlüssig anzuordnen, beispielsweise indem es eingeklemmt wird. Dabei kann das Zusatzelement in seinem Mittelabschnitt bzw. Wirkbereich bevorzugt derart gestaltet sein, dass dieser bei Korrosion zuerst geschwächt wird, wodurch über die Zeit die Klemmwirkung verlorengeht und das Zusatzelement einfach herunterfällt. Dabei sind die herunterfallenden Teile des Zusatzelements zweckmäßigerweise so auszulegen, dass sie die Größe von z. B. kleinen Steinchen und auch deren Gewicht nicht überschreiten. Bevorzugt haben die Teile eine maximale Erstreckung bis maximal 10 mm, besonders bevorzugt bis maximal 5 mm. Das Gewicht liegt bei bevorzugt unter 10 g, besonders bevorzugt bei unter 5 g. Bei einer Inspektion kann leicht über eine Sichtprüfung kontrolliert werden, ob gegebenenfalls neue Zusatzelemente eingebracht werden müssen. Der Anordnungsbereich ist immer dazu da, einen Kontakt mit dem zu schützenden Material, in diesem Fall mit dem Reibring, und insbesondere mit den Verbindungsstegen, herzustellen. Es versteht sich, dass der Kontakt auch mittelbar über den Einsatz bzw. die Verwendung eines weiteren Elements erfolgen kann. Es ist also nicht zwingend erforderlich, dass das Zusatzelement bzw. dessen Anordnungsbereich in direktem Kontakt mit den Reibringen oder den Verbindungsstegen steht. Entscheidend ist, dass das zu schützende Metall, in dem Fall die Reibringe und die Verbindungsstege, mit dem oder den Zusatzelement(en) elektrisch leitend verbunden ist. Sichergestellt werden muss, dass Elektronen in Richtung des zu schützenden Metalls fließen können. Damit ist sichergestellt, dass nicht das zu schützende Metall, sondern der unedlere Werkstoff des Zusatzelements seine Elektronen abgibt, oxidiert wird und in Lösung geht. In einer alternativ bevorzugten Ausführungsform kann das Zusatzelement auch als scheibenförmiges Element ausgebildet sein, welches konzentrisch innerhalb der Reibringe angeordnet ist. Der Anordnungsbereich ist dann sozusagen umlaufend ausgebildet.

Zweckmäßigerweise weist das Zusatzelement einen Wirkbereich auf, welcher durch Korrosion derart schwächbar ist, dass die Anordnung des Zusatzelements von der Bremsscheibe durch Korrosion des Wirkbereichs lösbar ist. Unabhängig von der Lösbarkeit weist das Zusatzelement immer einen Wirkbereich auf. Wenn das Zusatzelement aus ein und demselben Werkstoff hergestellt ist und dieser im Vergleich zum Werkstoff der Bremsscheibe unedler ist, so ist das ganze Zusatzelement der Wirkbereich. Es wirkt also auch der Anordnungsbereich als Wirkbereich. Der Unterschied liegt allein darin begründet, dass der Anordnungsbereich zumindest teilweise in Kontakt mit der Bremsscheibe steht. Mit Vorteil ist auch das Zusatzelement aus zwei Werkstoffen ausgebildet. Der Wirkbereich ist beispielsweise aus einem unedleren Material als der Anordnungsbereich und dieser aus einem unedleren Material als die Bremsscheibe bzw. deren Bauteile wie Reibringe und Verbindungsstege etc. Damit kann die Korrosion noch gezielter auf die gewünschten Bauteile aufgeteilt und damit gerichtet werden. Beispielsweise kann auf diese Weise sichergestellt werden, dass ein zum Beispiel hakenförmiger Anordnungsbereich dauerhaft angeordnet bleibt, während gezielt der Wirkbereich geschwächt wird. Ein derart "aufgebrauchtes" Zusatzelement kann bei der Fahrt und den dann herrschenden Zentrifugalkräften nicht weggeschleudert werden. Vielmehr ist ein leichter und kostengünstiger Austausch beim nächsten Werkstattbesuch möglich. Mit Vorteil kann also durch eine geeignete Materialwahl verhindert werden, dass ein im Bereich des Anordnungsbereichs bereits geschwächtes Zusatzelement aufgrund der in der Bremsscheibe auftretenden Zentrifugalkräfte beispielsweise wegfliegt. Bevorzugt ist darauf zu achten, dass der Anordnungsbereich möglichst dick und mit kleiner Oberfläche ausgebildet ist. Der Wirkbereich sollte eine möglichst geringe Wanddicke mit einer großen Oberfläche aufweisen, so dass bevorzugt dieser Bereich korrodiert wird. Bei einem Versagen aufgrund zu hoher Korrosion des Zusatzelements fällt dieses nach innen aus der Bremsscheibe heraus, einem Versagen während des Betriebs, in dem das Element durch die radialen Kräfte nach außen beschleunigt wird, wird somit vorgebeugt. Weiterhin bevorzugt ist das Zusatzelement mehrteilig, z. B. dreiteilig, ausgeführt, wobei ein mittlerer Teil die Funktion des Wirkbereichs übernimmt und die anderen Teile die Funktion der Anordnungsbereiche. Die verschiedenen Teile können bevorzugt form- und/oder kraftschlüssig verbunden sein, beispielsweise über ein Gewinde oder indem sie ineinander steckbar sind.

Vorteilhafterweise ist das Zusatzelement als zumindest bereichsweise um eine Rotationsachse der Bremsscheibe umlaufender Ring ausgebildet. Die Rotationsachse ist die bereits genannte Rotationsachse, zu welcher der Reibring bzw. die Reibringe also sozusagen die Bremsscheibe konzentrisch angeordnet sind. Ein derart angeordneter zumindest bereichsweise umlaufender Ring ist also mit Vorteil auch parallel zu den Reibringen bzw. zu den Reibflächen innerhalb des Zwischenraums angeordnet. Die Anordnung erfolgt in einer bevorzugten Ausführungsform an einer der Reibfläche des Reibrings gegenüberliegenden Seite bzw. Fläche des Reibrings, mit anderen Worten an einer Innenfläche. In bevorzugten Ausführungsformen ist der Reibring rund bzw. kreisrund ausgebildet. Alternativ bevorzugt sind auch eine Wellenform und/oder eine zumindest bereichsweise eckige Form denkbar. Dabei beziehen sich die oben angesprochenen Formen auf eine Ansicht im Wesentlichen entlang der Rotationsachse. Auch in einer Ansicht senkrecht zur Rotationsachse sind verschiedene Ausführungsformen des Zusatzelements denkbar. Es kann hierbei flach ausgebildet sein und/oder auch eckig und/oder wellenförmig. Bevorzugt kann es abwechselnd einmal an dem einen, einmal an dem anderen Reibring bzw. den entsprechenden Innenflächen anliegen.

In einer bevorzugten Ausführungsform ist zumindest ein Verbindungssteg als Zusatzelement ausgebildet. Mit Vorteil ist also eine Vielzahl von zusätzlichen nichttragenden Stegen in Form von Zusatzelementen zwischen den Reibringen angebracht. So wird auch nach dem Versagen der Zusatzelemente aufgrund von Korrosion sichergestellt, dass die Bremsscheibe ihre Funktionsfähigkeit beibehält. Alternativ bevorzugt ist auch das großflächige bzw. vollflächige Aufbringen eines Zusatzelements, vorzugsweise an den Innenflächen der Bremsscheibe denkbar.

Zweckmäßigerweise ist das Zusatzelement mit einer Vielzahl von Verbindungsstegen in Kontakt. Hierbei könnte insbesondere ein drahtförmiger Werkstoff als Zusatzelement eingeführt werden, welches zwischen den Verbindungsstegen entlang geführt wird und innerhalb der Bremsscheibe durch Verdrehen, Verzwirbeln oder ähnlichem fixiert wird. Mit Vorteil ist eine derartige Ausführungsform besonders auch nachträglich an Bremsscheiben anbringbar. Alternativ kann das Zusatzelement auch schlauchartig von innen nach außen, bezogen auf die Rotationsachse, die Verbindungsstege umlaufen, was besonders günstig bei einem Herstellungsverfahren ist, wenn das Zusatzelement vor dem Aufgießen des Reibrings bereits in der Gussform eingelegt wird. Auch für ein nachträgliches Einbringen des Zusatzelements eignet sich diese Variante allerdings sehr gut. Grundsätzlich sollte das Zusatzelement gesichert werden, damit es weder herausfallen noch geräuschintensiv die Lage verändern kann, wobei die Verbindungsstege durch entsprechende Formgebung des Zusatzelements und entsprechenden Eingriff (umgreifen, verspannen...) eine solche Sicherung ermöglichen. Hierfür ist die entsprechende Auslegung des Anordnungsbereichs entscheidend.

Vorzugsweise ist eine Vielzahl von Zusatzelementen vorgesehen. Dadurch kann der Korrosionsschutz sehr genau gesteuert und gezielt ausgelegt werden. Ein Hersteller bzw. Anwender von Bremsscheiben weiß in der Regel aus Erfahrung, welches die hinsichtlich der Korrosion kritischen Punkte bei einer Bremsscheibe sind. Dies sind beispielsweise die Verbindungsstege. Vorteilhafterweise muss also nicht die ganze Bremsscheibe bzw. das Material, aus dem die Bremsscheibe besteht, mit einem Korrosionsschutz versehen werden, sondern lediglich die Verbindungsstege und/oder der oder die Bereiche in der Nähe der Verbindungsstege. Durch nachträglich anordenbare Zusatzelemente ist auch ein äußerst individueller Korrosionsschutz realisierbar, da jeder Anwender das zumindest eine Zusatzelement dort anbringen, wo er eine Korrosionsgefahr sieht.

Weiter vorzugsweise ist die Gestaltung des Zusatzelements derart ausgelegt, eine weitere Funktion, vorzugsweise eine Kühlfunktion, bereitzustellen. Mit Vorteil ist das Zusatzelement als den kompletten Verbindungssteg umgreifendes Element derart gestaltet, dass es die Luft gezielt durch die Bremsscheibe leitet, ähnlich wie eine Schaufel einer Turbine. Dabei muss sichergestellt werden, dass auch bei einem Versagen des Zusatzelements ein ausreichender Luftstrom zur Kühlung der Bremsscheibe vorhanden ist. Es versteht sich, dass vorteilhafterweise eine Vielzahl derartiger, eine Kühlfunktion bereitstellender, Zusatzelemente vorgesehen ist.

Zweckmäßigerweise ist das Zusatzelement derart ausgebildet oder an dem Verbindungssteg und/oder an der Bremsscheibe angeordnet bzw. anordenbar, dass bei einer Rotation der Bremsscheibe ein von der Bremsscheibe gelöstes Zusatzelement den Zwischenraum nicht radial von der Rotationsachse weg und/oder in Zentrifugalrichtung verlassen kann. Von der Rotationsachse aus gesehen ist also beispielsweise zuerst das Zusatzelement und dann in einem von der Rotationsachse weiter entfernten Abstand, aber in der gleichen Richtung wie das Zusatzelement, der Verbindungssteg angeordnet. Dieser wirkt radial zur Rotationsachse gesehen wie ein Schutzwall bzw. eine Schutzwand. Die Abflugrichtung eines Zusatzelements ist abhängig von der Drehzahl der Bremsscheibe, so dass nicht exakt vorausgesagt werden kann, in welchem Winkel das Zusatzelement von der Bremsscheibe wegfliegt. Bevorzugt ist daher der Schutzwall aus mehreren Verbindungsstegen gebildet, welche ausgelegt sind, eine Sperrwirkung bereitzustellen. Mit Vorteil ist auch ein Abstand, im Wesentlichen senkrecht und im Wesentlichen radial zur Rotationsachse gesehen, zwischen zwei Verbindungsstegen gemessen kleiner als das Zusatzelement und/oder dessen Anordnungsbereich und/oder dessen Wirkbereich. Wenn beispielsweise der Wirkbereich eines Zusatzelements durchkorrodiert ist und sich dadurch das Zusatzelement bzw. der Anordnungsbereich lösen würde, könnte dieser nicht hinausgeschleudert werden, da er die Verbindungsstege bzw. den Raum zwischen zwei Verbindungsstegen nicht passieren kann. Bevorzugt wirken eine Vielzahl von Verbindungsstegen wie eine Art Labyrinthdichtung, allerdings nicht für Flüssigkeiten oder dergleichen, sondern für wegfliegende Zusatzelemente.

Vorteilhafterweise ist das Zusatzelement über ein umformendes Fertigungsverfahren form- und/oder kraftschlüssig mit der Bremsscheibe verbunden. Bevorzugterweise handelt es sich bei dem umformenden Fertigungsverfahren um ein Innenhochdruckumformverfahren.

Vorzugsweise ist das Zusatzelement oder eine Vielzahl von Zusatzelementen derart ausgelegt und/oder angeordnet, dass dessen oder deren Massenmittelpunkt auf der Rotationsachse der Bremsscheibe anordenbar bzw. angeordnet ist. Es versteht sich, dass der Massenmittelpunkt der Bremsscheibe für einen guten Rundlauf vorzugsweise auf der Rotationsachse angeordnet ist. Mit Vorteil ist das Zusatzelement also derart ausgelegt oder gestaltet, dass dessen Massenmittelpunkt auf der Rotationsachse platzierbar ist. Dies ist z. B. bei scheibenförmigen, ringförmigen also bei im Wesentlichen rotationssymmetrischen Zusatzelementen möglich. Weiter vorzugsweise ist eine Vielzahl von Zusatzelementen derart zueinander anordenbar bzw. angeordnet, dass deren gemeinsamer Massenmittelpunkt auf der Rotationsachse der Bremsscheibe anordenbar ist. D.h. erst durch die Anordnung der Zusatzelemente zueinander und letztendlich an der Bremsscheibe ist der gemeinsame Massenmittelpunkt der Zusatzelemente auf der Rotationsachse angeordnet. Bevorzugt sind jeweils zumindest zwei Zusatzelemente radial gesehen gegenüberliegend der Rotationsachse angeordnet, wobei in Umfangsrichtung gesehen zwei aufeinanderfolgende Zusatzelemente immer in einem gleichen Winkel zueinander angeordnet sind, beispielsweise in einem Winkel von 180°, 90° oder 45°. Mit anderen Worten erfolgt die Anordnung bevorzugt in Winkeln, welche mit einem ganzzahligen Vielfachen multipliziert 360° ergeben. Bevorzugt kann die Bremsscheibe auch über die Anordnung des oder der Zusatzelemente gewuchtet werden, beispielsweise, wenn der Massenmittelpunkt der Bremsscheibe noch nicht exakt auf der Rotationsachse liegt. Bevorzugt ist das Zusatzelement also auch ein Wuchtgewicht.

Erfindungsgemäß ist ein Zusatzelement, insbesondere ein Korrosionsschutzelement, ausgelegt, für eine vorzugsweise form- und/oder kraftschlüssige Anordnung in einem Zwischenraum einer Bremsscheibe, insbesondere einer innenbelüfteten Bremsscheibe. Bevorzugt ist also insbesondere auch eine nachträgliche Anordnung des Zusatzelements an der Bremsscheibe. Dabei bezieht sich das Wort "nachträglich" auf die Herstellung der Bremsscheibe. Mit Vorteil kann das Zusatzelement nach der Herstellung, also nachträglich, an der Bremsscheibe angeordnet werden. Hierzu weist das Zusatzelement zumindest einen Anordnungsbereich auf, über welchen es an der Bremsscheibe, insbesondere an einem Reibring oder an Reibringen oder an zumindest einem Verbindungssteg etc., anordenbar ist.

Erfindungsgemäß ist ein Zusatzelement, insbesondere ein Korrosionsschutzelement, ausgelegt, über ein umformendes Fertigungsverfahren, vorzugsweise ein IHU-Verfahren (Innenhochdruck-Umformverfahren), an einer Bremsscheibe angeordnet zu werden. Mit Vorteil ist das Zusatzelement in einer bevorzugten Ausführungsform als zumindest teilweise zylindrisch ausgebildeter Hohlkörper ausgebildet, welcher an einem Ende verschlossen ist. Bevorzugt wird das Zusatzelement in einer Aufnahme, beispielsweise in einer entsprechenden Öffnung oder Bohrung der Bremsscheibe angeordnet. Das in der Aufnahme bzw. in der Öffnung angeordnete Zusatzelement wird dann über ein Innenhochdruckumformverfahren derart aufgeweitet, dass es mit seiner Außenfläche eine form- und/oder kraftschlüssige Verbindung mit der Bremsscheibe eingeht. Die Aufweitung kann dabei bevorzugt auch über ein geeignetes Handwerkzeug erfolgen, welches durch Aufbringen einer Kraft das Zusatzelement derart aufweitet, dass ein Form- und/oder Kraftschluss mit der Bremsscheibe herstellbar ist. Das Zusatzelement kann unterschiedlich geformt bzw. gestaltet sein. Entscheidend ist, dass es derart eine Öffnung vorsieht, dass es aufgeweitet werden kann, es muss also einen Zugang wie beispielsweise zumindest eine Bohrung und/oder zumindest eine offene Seite aufweisen. Die Wandstärken können dabei unterschiedlich z. B. konstant/nicht konstant ausgebildet sein. Bei einem gleichen Innendruck können auf diese Weise unterschiedliche Verformungsgrade und damit Kraft- und/oder Formschlüsse mit dem umgebenden Material realisiert werden. Bevorzugt weist das Zusatzelement einen runden, insbesondere einen kreisrunden Querschnitt auf. Das Zusatzelement kann dabei oder alternativ auch wellig oder polygonförmig ausgebildet sein (die Ecken können über geschwungene und oder gerade Linien verbunden sein etc.).

Erfindungsgemäß umfasst ein Verfahren zur Herstellung einer Bremsscheibe, insbesondere für ein Nutzfahrzeug, die Schritte:
- Bereitstellen zumindest eines Zusatzelements und einer Gussform für eine Bremsscheibe, insbesondere für eine innenbelüftete Bremsscheibe;
- Anordnen des Zusatzelements in der Gussform;
- Gießen der Bremsscheibe derart, dass zumindest ein Anordnungsbereich des Zusatzelements mit der Bremsscheibe in Kontakt ist, wodurch zumindest bereichsweise eine form- und/oder kraftschlüssige Verbindung herstellbar ist.
Bevorzugt wird der Anordnungsbereich zumindest bereichsweise umgossen und/oder angegossen.

Erfindungsgemäß umfasst ein Verfahren zur Herstellung einer Bremsscheibe, insbesondere für ein Nutzfahrzeug, die Schritte:
- Bereitstellen zumindest eines Zusatzelements und einer Bremsscheibe, insbesondere einer innenbelüfteten Bremsscheibe, wobei die Bremsscheibe zumindest eine Aufnahme zur Anordnung des zumindest einen Zusatzelements aufweist;
- Anordnen des Zusatzelements in der Aufnahme der Bremsscheibe;
- Herstellen einer form- und/oder kraftschlüssigen Verbindung des Zusatzelements mit der Bremsscheibe über eine Umformung des Zusatzelements durch ein umformendes Fertigungsverfahren.
Mit Vorteil handelt es sich bei dem umformenden Fertigungsverfahren um ein Innenhochruckumformverfahren (IHU).

Erfindungsgemäß umfasst ein Verfahren zur Herstellung einer Bremsscheibe, insbesondere für ein Nutzfahrzeug, die Schritte:
- Bereitstellen zumindest eines Zusatzelements und einer Bremsscheibe, insbesondere einer innenbelüfteten Bremsscheibe;
- Anordnen des Zusatzelements über eine form- und/oder kraftschlüssige Verbindung an der Bremsscheibe.

Mit Vorteil kann über das Verfahren jede beliebige Bremsscheibe mit dem Zusatzelement nachgerüstet werden.

Es versteht sich, dass die entsprechenden Merkmale der erfindungsgemäßen Bremsscheibe auch für die erfindungsgemäßen Zusatzelemente gelten. Die Merkmale der erfindungsgemäßen Bremsscheibe sowie der erfindungsgemäßen Zusatzelemente gelten untereinander sowie für die erfindungsgemäßen Verfahren.

Weitere Vorteile und Merkmale ergeben sich aus der nachfolgenden Beschreibung bevorzugter Ausführungsformen der erfindungsgemäßen Bremsscheibe, der erfindungsgemäßen Zusatzelemente sowie der erfindungsgemäßen Verfahren mit Bezug auf die beigefügten Figuren. Einzelne Merkmale der einzelnen Ausführungsformen können dabei im Rahmen der Erfindung miteinander kombiniert werden.

Es zeigen:
- Fig. 1:: eine teilweise Schnittdarstellung einer bevorzugten Ausführungsform einer Bremsscheibe etwa senkrecht zu einer Rotationsachse;
- Fig. 2:: eine Schnittdarstellung einer bevorzugten Ausführungsform einer Bremsscheibe quer zu einer Rotationsachse;
- Fig. 3a:: eine Darstellung einer bevorzugten Ausführungsform einer an den Verbindungsstegen geschnittenen Bremsscheibe mit einem ringförmigen Zusatzelement;
- Fig. 3b:: eine Darstellung einer bevorzugten Ausführungsform einer an den Verbindungsstegen geschnittenen Bremsscheibe mit einem im Wesentlichen wellenförmigen Zusatzelement;
- Fig. 4a:: eine teilweise Schnittdarstellung einer bevorzugten Ausführungsform einer Bremsscheibe mit einem Zusatzelement, welches eine Kühlfunktion übernimmt;
- Fig. 4b:: eine teilweise Schnittdarstellung einer bevorzugten Ausführungsform einer Bremsscheibe mit als Verbindungsstege ausgebildeten Zusatzelementen;
- Fig. 4c:: eine teilweise Schnittdarstellung einer bevorzugten Ausführungsform einer Bremsscheibe mit zwei über ein Zusatzelement verbundenen Verbindungsstegen;
- Fig. 4d:: eine teilweise Schnittdarstellung einer bevorzugten Ausführungsform mit einem an zwei Verbindungsstegen form- und/oder kraftschlüssig angeordneten Zusatzelement;
- Fig. 5a:: eine bevorzugte Ausführungsform eines Zusatzelements in einer Schnittdarstellung;
- Fig. 5b:: eine bevorzugte Ausführungsform eines Zusatzelements angeordnet in einer Aufnahme;
- Fig. 5c:: eine form- und/oder kraftschlüssige Anordnung der bevorzugten Ausführungsform des Zusatzelements in der Aufnahme.

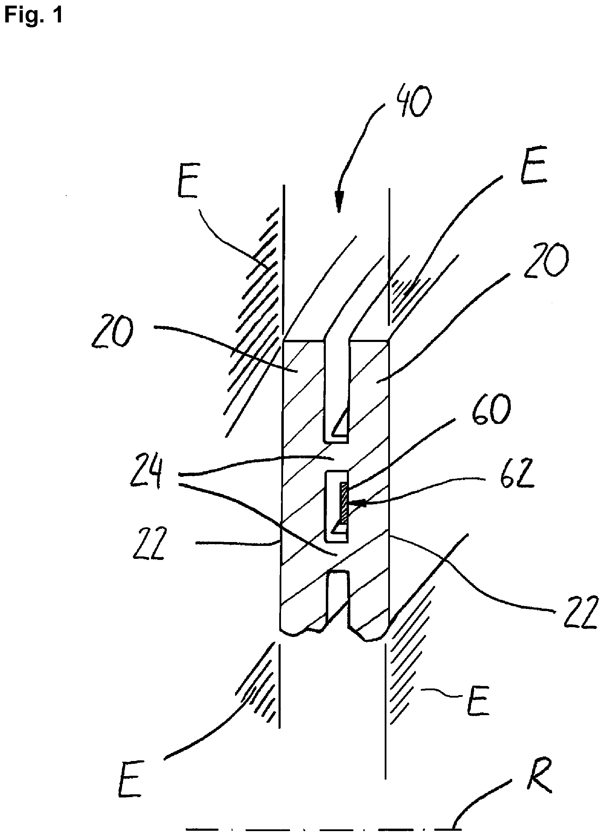

**Fig. 1** zeigt eine bevorzugte Ausführungsform einer Bremsscheibe in einer Schnittdarstellung im Wesentlichen quer zu einer Rotationsachse R. Die Bremsscheibe umfasst zwei Reibringe 20, welche jeweils eine Reibfläche 22 aufweisen. Die beiden Reibflächen 22 beschreiben je eine Ebene E. Zwischen den Ebenen E wird ein Zwischenraum 40 gebildet. Die beiden Reibringe 20 sind in dem in Fig. 1 dargestellten Ausschnitt über zwei Verbindungsstege 24 verbunden. Zwischen den beiden Verbindungsstegen 24 ist ein Zusatzelement 60 angedeutet, welches über einen Anordnungsbereich 62 an einer Innenfläche in diesem Fall des rechten Reibrings 20 angeordnet ist. Die Ebenen E sowie die ganze Bremsscheibe stehen im Wesentlichen senkrecht zu einer Rotationsachse R.

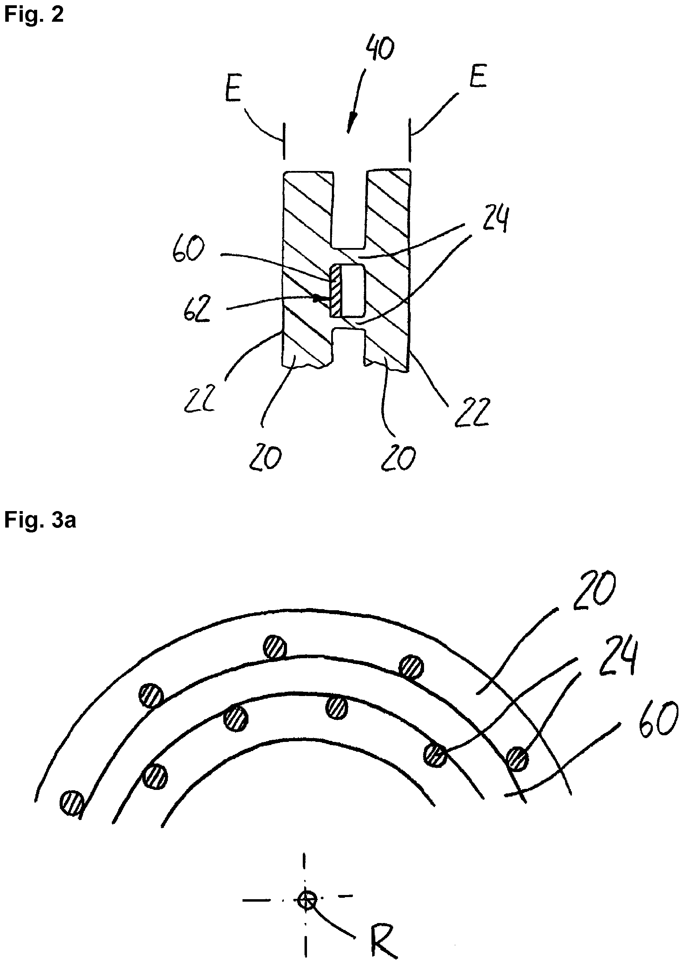

**Fig. 2** zeigt in einer Schnittdarstellung quer zu einer Rotationsachse R eine weitere bevorzugte Ausführungsform einer Bremsscheibe. Zu sehen sind zwei Reibringe 20 mit entsprechenden Reibflächen 22, an welcher sich die Ebenen E erstrecken. Zwischen den Ebenen E wird ein Zwischenraum 40 gebildet. Innerhalb des Zwischenraumes 40 ist ein Zusatzelement 60 mit einem Anordnungsbereich 62 an einer Innenfläche, in diesem Fall des linken Reibrings, angeordnet. Die Anordnung erfolgt dabei auch direkt an zwei Verbindungsstegen 24, welche die beiden Reibringe 20 verbinden.

**Fig. 3a** zeigt eine bevorzugte Ausführungsform einer Bremsscheibe in einer Schnittdarstellung geschnitten quer zu einer Rotationsachse R. Zu sehen ist ein Reibring 20 mit einer Vielzahl von Verbindungsstegen 24, welche in Fig. 3a schraffiert dargestellt sind. Zwischen und entlang den Verbindungsstegen 24 verläuft ein im Wesentlichen konzentrisch um eine Rotationsachse R verlaufendes Zusatzelement 60.

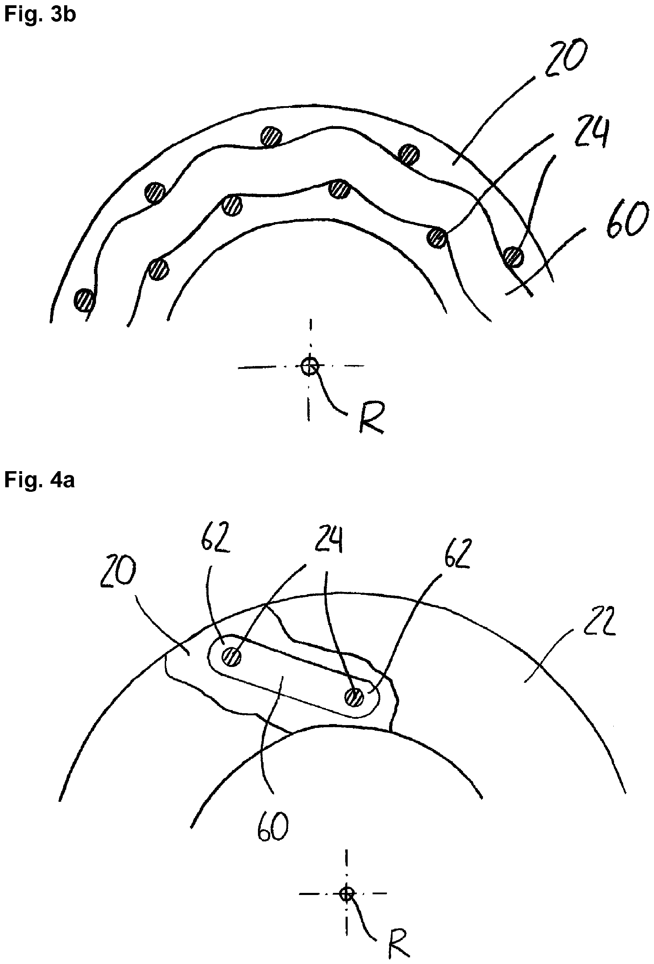

**Fig. 3b** zeigt eine weitere bevorzugte Ausführungsform einer Bremsscheibe mit einem im Wesentlichen wellenförmigen Zusatzelement 60. Zu sehen ist in Fig. 3b weiter ein Reibring 20 mit einer Vielzahl von Verbindungsstegen 24, um welche herum sich das Zusatzelement 60 windet. Die gesamte Anordnung aus dem Reibring 20, den Verbindungsstegen 24 und dem Zusatzelement 60 ist im Wesentlichen senkrecht zu einer Rotationsachse R positioniert.

**Fig. 4a** zeigt eine weitere bevorzugte Ausführungsform einer Bremsscheibe in einer teilweisen Schnittdarstellung. Zu sehen ist eine Reibfläche 22 und ein, in einer in Rotationsrichtung R gesehenen Richtung, dahinter gelegener Reibring 20. Ein Zusatzelement 60, welches über zwei Anordnungsbereiche 62 mit jeweils zwei Verbindungsstegen 24 verbunden ist, erfüllt in der in Fig. 4a dargestellten bevorzugten Ausführungsform durch eine Schaufelform eine Kühlfunktion.

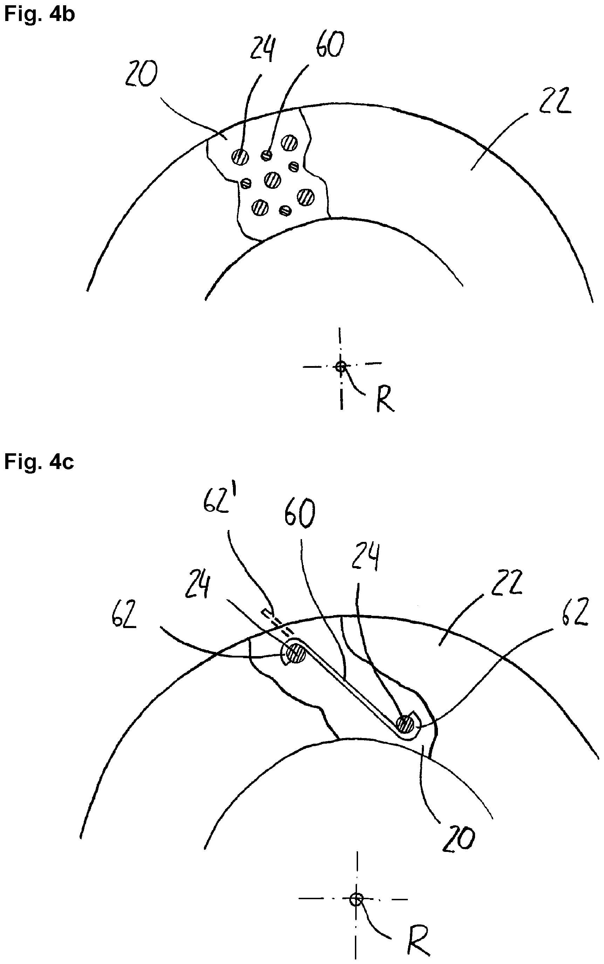

**Fig. 4b** zeigt eine bevorzugte Ausführungsform einer Bremsscheibe in einer teilweisen Schnittdarstellung. Zu sehen ist in Fig. 4b eine Reibfläche 22 und ein Reibring 20. Die bevorzugte Ausführungsform der Bremsscheibe weist Zusatzelemente 60 auf, welche im Wesentlichen die Form von Verbindungsstegen 24 aufweisen.

**Fig. 4c** zeigt eine weitere bevorzugte Ausführungsform einer Bremsscheibe in einer teilweisen Schnittdarstellung. Zu sehen ist eine Bremsfläche 22 und ein dahinter liegender Reibring 20. Um zwei Verbindungsstege 24 ist ein Zusatzelement 60 über zwei Anordnungsbereiche 62 form- und/oder kraftschlüssig angeordnet. Der obere der beiden Anordnungsbereiche 62 ist gestrichelt in einem Grundzustand 62' dargestellt. Das heißt, in der in Fig. 4c dargestellten bevorzugten Ausführungsform des Zusatzelements 60 ist der Anordnungsbereich derart umformbar gestaltet, dass er, beispielsweise von Hand, an den Verbindungssteg 24 anpassbar bzw. anordenbar ist.

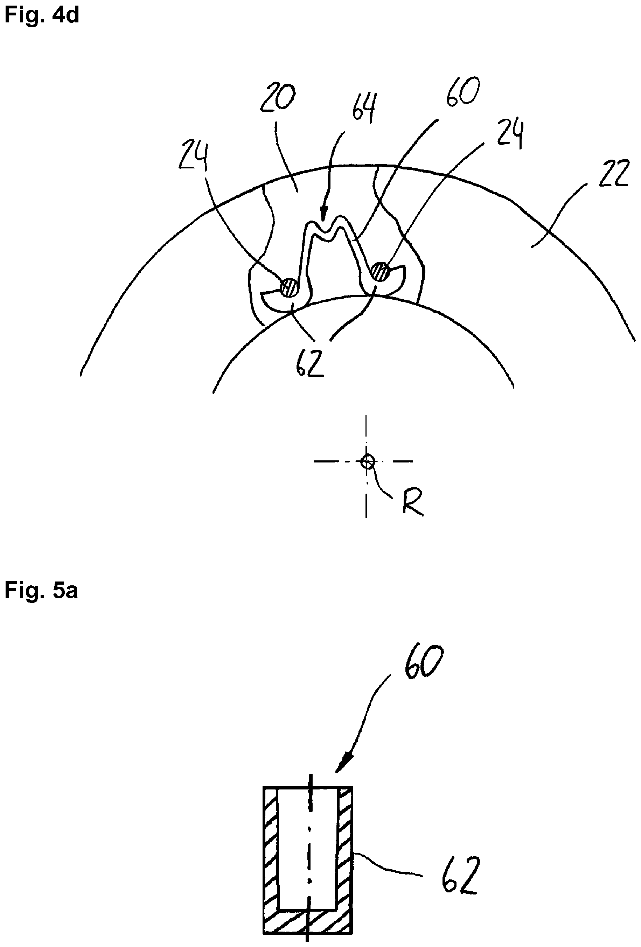

**Fig. 4d** zeigt eine teilweise Schnittdarstellung einer weiteren bevorzugten Ausführungsform einer Bremsscheibe. Ein Zusatzelement 60 weist zwei Anordnungsbereiche 62 auf, über welche das Zusatzelement 60 an zwei Verbindungsstegen 64 form- und/oder kraftschlüssig angeordnet ist. Die beiden Anordnungsbereiche 62 sind über einen Wirkbereich 64 miteinander verbunden. Während die beiden Anordnungsbereiche 62 dick und mit einer vergleichsweise kleinen Oberfläche versehen sind, ist der dazwischen liegende Wirkbereich 64 dünn und mit einer großen Oberfläche ausgebildet. Des Weiteren wird über den Wirkbereich 64 bzw. dessen Form eine zumindest teilweise Verspannung des Zusatzelements 60 zwischen den Verbindungsstegen 24 erreicht. So ist es leicht vorstellbar, dass, wenn sich der Wirkbereich 64 auflöst, die restlichen Teile des Zusatzelements 60 in der in Figur 4d dargestellten Position der Bremsscheibe in Richtung einer Rotationsachse R bzw. nach unten, z.B. der Schwerkraft folgend, fallen. Es versteht sich weiterhin, dass das wie in Fig. 4d dargestellte Zusatzelement 60 leicht wieder eingebaut werden kann, indem es beispielsweise von innen in die Bremsscheibe eingeklipst wird.

**Fig. 5a** zeigt eine bevorzugte Ausführungsform eines Zusatzelements. Das Zusatzelement 60 ist als im Wesentlichen zylindrischer Hohlkörper ausgebildet, welcher an einem Ende verschlossen ist. Über einen Anordnungsbereich 62 ist es an einem weiteren Element, zum Beispiel einer Bremsscheibe, anordenbar.

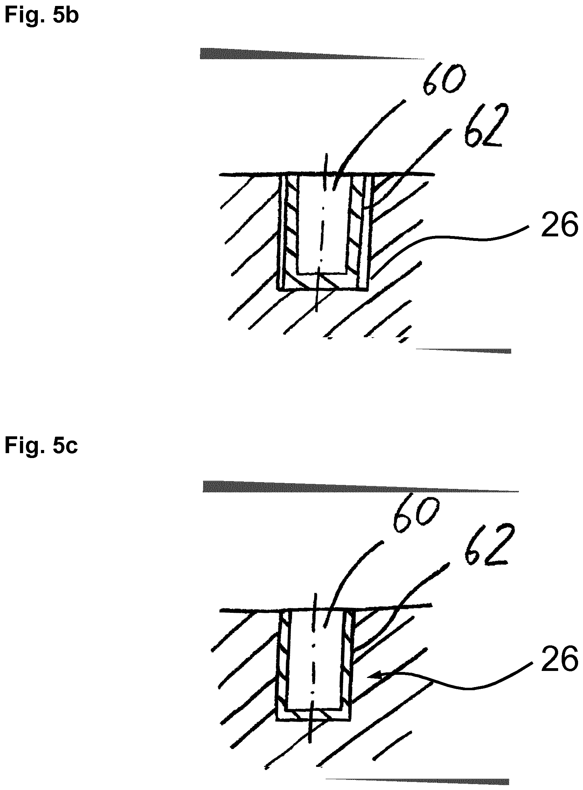

**Fig. 5b** zeigt eine bevorzugte Ausführungsform eines Zusatzelements 60 mit einem Anordnungsbereich 62 mit einer losen Anordnung innerhalb eines weiteren Elements. Das weitere Element kann beispielsweise ein Reibring 20 oder ein Verbindungssteg 24 einer Bremsscheibe sein. Für die Anordnung weist das weitere Element, insbesondere der Verbindungssteg 24 oder die Bremsscheibe, eine Aufnahme 26 auf, welche in der in Fig. 5b dargestellten bevorzugten Ausführungsform eine Bohrung ist.

**Fig. 5c** zeigt die aus Fig. 5b bekannte bevorzugte Ausführungsform des Zusatzelements 60, welches in dem in Fig. 5c gezeigten Zustand form- und/oder kraftschlüssig mit der Aufnahme 26 des weiteren Elements, beispielsweise des Verbindungsstegs oder der Bremsscheibe, verbunden ist. Die Verbindung wird über ein zumindest bereichsweise umfängliches Aufweiten des Zusatzelements 60 und damit dessen Anordnungsbereich 62 erreicht, bevorzugt durch ein umformendes Fertigungsverfahren wie z.B. Innenhochdruckumformen. Derart kleine Bauteil können alternativ bevorzugt aber auch von Hand mit einem entsprechend angepassten "Aufweite"-Werkzeug angeordnet werden.

### Bezugszeichenliste

- 20: Reibring
- 22: Reibfläche
- 24: Verbindungssteg
- 26: Aufnahme
- 40: Zwischenraum
- 60: Zusatzelement
- 62: Anordnungsbereich
- 62': Anordnungsbereich in einem Grundzustand
- 64: Wirkbereich
- E: Ebene
- R: Rotationsachse

## Patentansprüche

1. Bremsscheibe, insbesondere für ein Nutzfahrzeug,
welche zwei im Wesentlichen parallel zueinander angeordnete Reibringe (20) und zumindest einen Verbindungssteg (24) aufweist, wobei die Reibringe (20) jeweils eine Reibfläche (22) aufweisen, welche jeweils eine Ebene (E) beschreiben,
wobei der zumindest eine Verbindungssteg (24) die zwei Reibringe (20) derart miteinander verbindet, dass zwischen den Ebenen (E) der Reibringe (20) ein Zwischenraum (40) gebildet ist,
wobei sich der Zwischenraum (40) von einem zum anderen Reibring (20) erstreckt, **dadurch gekennzeichnet, dass** die Bremsscheibe zumindest ein Zusatzelement (60) aufweist, das innerhalb des Zwischenraums (40) angeordnet ist,
wobei das Zusatzelement (60) aus einem unedleren Werkstoff als der zumindest eine Verbindungssteg (24) und die Reibringe (20) ausgebildet ist.

2. Bremsscheibe nach Anspruch 1,
wobei das Zusatzelement (60) einen Anordnungsbereich (62) aufweist, über welchen es an dem Verbindungssteg (24) und/oder an zumindest einem Reibring (20) festgelegt oder festlegbar ist.

3. Bremsscheibe nach einem der Ansprüche 1 und 2,
wobei das Zusatzelement (60) einen Wirkbereich (64) aufweist, welcher durch Korrosion derart schwächbar ist, dass die Anordnung des Zusatzelements (60) von der Bremsscheibe durch Korrosion des Wirkbereichs (64) lösbar ist.

4. Bremsscheibe nach einem der vorhergehenden Ansprüche,
wobei das Zusatzelement (60) als zumindest bereichsweise um eine Rotationsachse (R) der Bremsscheibe umlaufender Ring ausgebildet ist.

5. Bremsscheibe nach einem der vorhergehenden Ansprüche,
wobei zumindest ein Verbindungssteg (24) als Zusatzelement (60) ausgebildet ist.

6. Bremsscheibe nach einem der vorhergehenden Ansprüche,
wobei das Zusatzelement (60) mit einer Vielzahl von Verbindungsstegen (24) in Kontakt steht.

7. Bremsscheibe nach einem der vorhergehenden Ansprüche,
wobei eine Vielzahl von Zusatzelementen (60) vorgesehen ist und/oder wobei die Gestaltung des Zusatzelements (60) derart ausgelegt ist, eine weitere Funktion, vorzugsweise eine Kühlfunktion, bereitzustellen.

8. Bremsscheibe nach einem der vorhergehenden Ansprüche,
wobei das Zusatzelement (60) derart ausgebildet oder an dem Verbindungssteg (24) und/oder oder an der Bremsscheibe angeordnet ist, dass bei einer Rotation der Bremsscheibe ein von der Bremsscheibe gelöstes Zusatzelement (60) den Zwischenraum (40) nicht radial von der Rotationsachse (R) weg und/oder in Zentrifugalrichtung verlassen kann.

9. Bremsscheibe nach einem der vorhergehenden Ansprüche,
wobei das Zusatzelement (60) über ein umformendes Fertigungsverfahren form- und/oder kraftschlüssig mit der Bremsscheibe verbunden ist.

10. Bremsscheibe nach einem der vorhergehenden Ansprüche,
wobei das Zusatzelement (60) oder eine Vielzahl von Zusatzelementen (60) derart ausgelegt und/oder angeordnet ist, dass dessen oder deren Massenmittelpunkt auf der Rotationsachse (R) der Bremsscheibe anordenbar bzw. angeordnet ist.

11. Verfahren zur Herstellung einer Bremsscheibe, insbesondere für ein Nutzfahrzeug,
wobei die Bremsscheibe zwei im Wesentlichen parallel zueinander angeordnete Reibringe (20) und zumindest einen Verbindungssteg (24) aufweist, umfassend die Schritte:
- Bereitstellen zumindest eines Zusatzelements (60) und einer Gussform für eine Bremsscheibe, insbesondere für eine innenbelüftete Bremsscheibe;
- Anordnen des Zusatzelements (60) in der Gussform;
- Gießen der Bremsscheibe derart, dass zumindest ein Anordnungsbereich (62) des Zusatzelements (60) mit der Bremsscheibe in Kontakt ist, wodurch zumindest bereichsweise eine form- und/oder kraftschlüssige Verbindung herstellbar ist, wobei das Zusatzelement (60) innerhalb eines Zwischenraums (40) angeordnet ist, welcher sich von einem zum anderen Reibring (20) erstreckt, und
wobei das Zusatzelement (60) aus einem unedleren Werkstoff als der zumindest eine Verbindungssteg (24) und die Reibringe (20) ausgebildet ist.

12. Verfahren zur Herstellung einer Bremsscheibe, insbesondere für ein Nutzfahrzeug,
wobei die Bremsscheibe zwei im Wesentlichen parallel zueinander angeordnete Reibringe (20) und zumindest einen Verbindungssteg (24) aufweist, umfassend die Schritte:
- Bereitstellen zumindest eines Zusatzelements (60) und einer Bremsscheibe, insbesondere einer innenbelüfteten Bremsscheibe, wobei die Bremsscheibe zumindest eine Aufnahme zur Anordnung des zumindest einen Zusatzelements (60) aufweist;
- Anordnen des Zusatzelements (60) in der Aufnahme der Bremsscheibe;
- Herstellen einer form- und/oder kraftschlüssigen Verbindung des Zusatzelements (60) mit der Bremsscheibe über eine Umformung des Zusatzelements (60) durch ein umformendes Fertigungsverfahren, wobei das Zusatzelement (60) innerhalb eines Zwischenraums (40) angeordnet ist, welcher sich von einem zum anderen Reibring (20) erstreckt, und
wobei das Zusatzelement (60) aus einem unedleren Werkstoff als der zumindest eine Verbindungssteg (24) und die Reibringe (20) ausgebildet ist.

13. Verfahren zur Herstellung einer Bremsscheibe, insbesondere für ein Nutzfahrzeug,
wobei die Bremsscheibe zwei im Wesentlichen parallel zueinander angeordnete Reibringe (20) und zumindest einen Verbindungssteg (24) aufweist, umfassend die Schritte:
- Bereitstellen zumindest eines Zusatzelements (60) und einer Bremsscheibe, insbesondere einer innenbelüfteten Bremsscheibe;
- Anordnen des Zusatzelements (60) über eine form- und/oder kraftschlüssige Verbindung innerhalb eines Zwischenraums (40) an der Bremsscheibe, wobei sich der Zwischenraum (40) von einem zum anderen Reibring (20) erstreckt,
wobei das Zusatzelement (60) aus einem unedleren Werkstoff als der zumindest eine Verbindungssteg (24) und die Reibringe (20) ausgebildet ist.

## Claims

1. A brake disk, in particular for a commercial vehicle,
comprising two friction rings (20), which are arranged substantially parallel to each other, and at least one connector piece or connecting web (24), wherein the friction rings (20) each have a friction surface (22), which each define a plane (E),
wherein the at least one connecting web (24) connects the two friction rings (20) to each other such that an intermediate chamber (40) is formed between the planes (E) of the friction rings (20),
wherein the intermediate chamber (40) extends from one friction ring to the other friction ring (20), **characterized in that** the brake disk has at least one additional element (60), which is arranged inside the intermediate chamber (40),
wherein the additional element (60) is formed from a material baser than the at least one connecting web (24) and the friction rings (20).

2. The brake disk of claim 1,
wherein the additional element (60) has an arrangement area (62), by means of which it is or can be fixed to the connecting web (24) and/or to at least one friction ring (20).

3. The brake disk of any one of claims 1 and 2,
wherein the additional element (60) has an effective area (64), which can be weakened by corrosion such that the arrangement of the additional element (60) can be released or detached from the brake disk by corrosion of the effective area (64).

4. The brake disk of any one of the preceding claims,
wherein the additional element (60) is formed as a ring, which at least in a certain area runs about an axis of rotation (R) of the brake disk.

5. The brake disk of any one of the preceding claims,
wherein at least one connecting web (24) is formed as an additional element (60).

6. The brake disk of any one of the preceding claims,
wherein the additional element (60) is in contact with a plurality of connecting webs (24).

7. The brake disk of any one of the preceding claims,
wherein a plurality of additional elements (60) is provided and/or wherein the design of the additional element (60) is such that it provides a further function, preferably a cooling function.

8. The brake disk of any one of the preceding claims,
wherein the additional element (60) is designed or arranged on the connecting web (24) and/or on the brake disk such that, when the brake disk rotates, an additional element (60) released from the brake disk may not leave the intermediate chamber (40) radially away from the axis of rotation (R) and/or in the centrifugal direction.

9. The brake disk of any one of the preceding claims,
wherein the additional element (60) is connected to the brake disk in a form-fitting and/or force-fitting manner by means of a forming manufacturing method.

10. The brake disk of any one of the preceding claims,
wherein the additional element (60) or a plurality of additional elements (60) is/are adapted and/or arranged such that the center of mass thereof can be or is arranged on the axis of rotation (R) of the brake disk.

11. A method of manufacturing a brake disk, in particular for a commercial vehicle,
wherein the brake disk has two substantially parallel friction rings (20) and at least one connecting web (24), comprising the steps of:
- providing at least one additional element (60) and a casting mold for a brake disk, in particular for a vented brake disk;
- arranging the additional element (60) in the casting mold;
- casting the brake disk such that at least one arrangement area (62) of the additional element (60) is in contact with the brake disk, whereby at least in a certain area a form-fitting and/or force-fitting connection can be produced, wherein the additional element (60) is arranged within an intermediate chamber (40), which extends from one friction ring to the other friction ring (20),
and
wherein the additional element (60) is formed from a material baser than the at least one connecting web (24) and the friction rings (20).

12. A method of manufacturing a brake disk, in particular for a commercial vehicle,
wherein the brake disk has two substantially parallel friction rings (20) and at least one connecting web (24), comprising the steps of:
- providing at least one additional element (60) and a brake disk, in particular a vented brake disk, wherein the brake disk has at least one receptacle for arranging the at least one additional element (60);
- arranging the additional element (60) in the receptacle of the brake disk;
- producing a form-fitting and/or a force-fitting connection between the additional element (60) and the brake disk by deforming or shaping the additional element (60) by means of a forming manufacturing method, wherein the additional element (60) is arranged within an intermediate chamber (40), which extends from one friction ring to the other friction ring (20), and
wherein the additional element (60) is formed from a material baser than the at least one connecting web (24) and the friction rings (20).

13. A method of manufacturing a brake disk, in particular for a commercial vehicle,
wherein the brake disk has two substantially parallel friction rings (20) and at least one connecting web (24), comprising the steps of:
- providing at least one additional element (60) and a brake disk, in particular a vented brake disk;
- arranging the additional element (60) within an intermediate chamber (40) on the brake disk by means of a form-fitting and/or force-fitting connection, wherein the intermediate chamber (40) extends from one friction ring to the other friction ring (20), and
wherein the additional element (60) is formed from a material baser than the at least one connecting web (24) and the friction rings (20).

## Revendications

1. Disque de frein, en particulier pour un véhicule utilitaire,
qui comprend deux anneaux de friction (20) agencés sensiblement parallèlement l'un à l'autre, et au moins une barrette de liaison (24), les anneaux de friction (20) présentant chacun une surface de friction (22), qui décrivent chacune un plan (E),
dans lequel
ladite au moins une barrette de liaison (24) relie les deux anneaux de friction (20) l'un à l'autre de manière à former un intervalle (40) entre les plans (E) des anneaux de friction (20), et
l'intervalle (40) s'étend d'un anneau de friction (20) à l'autre, **caractérisé en ce que**
le disque de frein comprend au moins un élément supplémentaire (60) qui est agencé à l'intérieur de l'intervalle (40),
l'élément supplémentaire (60) étant réalisé en un matériau moins noble que celui de ladite au moins une barrette de liaison (24) et des anneaux de friction (20).

2. Disque de frein selon la revendication 1,
dans lequel l'élément supplémentaire (60) comprend une zone d'agencement (62) par laquelle il est fixé ou susceptible d'être fixé sur la barrette de liaison (24) et/ou sur au moins un anneau de friction (20).

3. Disque de frein selon l'une des revendications 1 et 2,
dans lequel l'élément supplémentaire (60) présente une zone active (64) qui est susceptible d'être affaiblie par corrosion de telle sorte que l'agencement de l'élément supplémentaire (60) est détachable du disque de frein par corrosion de la zone active (64).

4. Disque de frein selon l'une des revendications précédentes,
dans lequel l'élément supplémentaire (60) est réalisé sous la forme d'un anneau qui tourne au moins localement autour d'un axe de rotation (R) du disque de frein.

5. Disque de frein selon l'une des revendications précédentes,
dans lequel au moins une barrette de liaison (24) est réalisée en tant qu'élément supplémentaire (60).

6. Disque de frein selon l'une des revendications précédentes,
dans lequel l'élément supplémentaire (60) est en contact avec une multitude de barrettes de liaison (24).

7. Disque de frein selon l'une des revendications précédentes,
dans lequel est prévue une multitude d'éléments supplémentaires (60) et/ou la configuration de l'élément supplémentaire (60) est conçu de manière à assurer une autre fonction, de préférence une fonction de refroidissement.

8. Disque de frein selon l'une des revendications précédentes,
dans lequel l'élément supplémentaire (60) est réalisé ou agencé sur la barrette de liaison (24) et/ou sur le disque de frein de telle sorte que lors d'une rotation du disque de frein un élément supplémentaire (60) détaché du disque de frein ne peut pas quitter l'intervalle (40) radialement en éloignement de l'axe de rotation (R) et/ou en direction centrifuge.

9. Disque de frein selon l'une des revendications précédentes,
dans lequel l'élément supplémentaire (60) est relié en coopération de formes et/ou de forces au disque de frein par un procédé de fabrication par mise en forme.

10. Disque de frein selon l'une des revendications précédentes,
dans lequel l'élément supplémentaire (60) ou une multitude d'éléments supplémentaires (60) est conçu(e) et/ou agencé(e) de telle sorte que son ou leur centre de masse est agencé ou susceptible d'être agencé sur l'axe de rotation (R) du disque de frein.

11. Procédé de fabrication d'un disque de frein, en particulier pour un véhicule utilitaire,
dans lequel le disque de frein comprend deux anneaux de friction (20) agencés sensiblement parallèlement l'un à l'autre, et au moins une barrette de liaison (24), comprenant les étapes suivantes consistant à :
- fournir au moins un élément supplémentaire (60) et un moule pour un disque de frein, en particulier pour un disque de frein à ventilation intérieure ;
- agencer l'élément supplémentaire (60) dans le moule ;
- couler le disque de frein de telle sorte qu'au moins une zone d'agencement (62) de l'élément supplémentaire (60) est en contact avec le disque de frein,
ce pourquoi on peut réaliser au moins localement une liaison en coopération de formes et/ou de forces,
dans lequel l'élément supplémentaire (60) est agencé à l'intérieur d'un intervalle (40) qui s'étend d'un anneau de friction (20) à l'autre, et l'élément supplémentaire (60) est réalisé en un matériau moins noble que celui de ladite au moins une barrette de liaison (24) et des anneaux de friction (20).

12. Procédé de fabrication d'un disque de frein, en particulier pour un véhicule utilitaire,
dans lequel le disque de frein comprend deux anneaux de friction (20) agencés sensiblement parallèlement l'un à l'autre, et au moins une barrette de liaison (24), comprenant les étapes suivantes consistant à :
- fournir au moins un élément supplémentaire (60) et un disque de frein, en particulier un disque de frein à ventilation intérieure, le disque de frein présentant au moins un logement pour agencer ledit au moins un élément supplémentaire (60) ;
- agencer l'élément supplémentaire (60) dans le logement du disque de frein ;
- réaliser une liaison en coopération de formes et/ou de forces de l'élément supplémentaire (60) avec le disque de frein par une mise en forme de l'élément supplémentaire par un procédé de fabrication par mise en forme, l'élément supplémentaire (60) étant agencé à l'intérieur d'un intervalle (40) qui s'étend d'un anneau de friction (20) à l'autre, et l'élément supplémentaire (60) est réalisé en un matériau moins noble que celui de ladite au moins une barrette de liaison (24) et des anneaux de friction (20).

13. Procédé de fabrication d'un disque de frein, en particulier pour un véhicule utilitaire,
dans lequel le disque de frein comprend deux anneaux de friction (20) agencés sensiblement parallèlement l'un à l'autre, et au moins une barrette de liaison (24), comprenant les étapes suivantes consistant à :
- fournir au moins un élément supplémentaire (60) et un disque de frein, en particulier un disque de frein à ventilation intérieure ;
- agencer l'élément supplémentaire (60) sur le disque de frein par une liaison en coopération de formes et/ou de forces à l'intérieur de l'intervalle (40), l'intervalle (40) s'étendant d'un anneau de friction (20) à l'autre, et
l'élément supplémentaire (60) est réalisé en un matériau moins noble que celui de ladite au moins une barrette de liaison (24) et des anneaux de friction (20).
